(19) Europäisches Patentamt / European Patent Office / Office européen des brevets

(11) **EP 4 527 772 A1**

(12) **EUROPEAN PATENT APPLICATION**

(43) Date of publication:
26.03.2025 Bulletin 2025/13

(21) Application number: 24179621.8

(22) Date of filing: 03.06.2024

(51) International Patent Classification (IPC):
**B65H 63/00** $^{(2006.01)}$  **D01H 13/32** $^{(2006.01)}$
**G05B 13/04** $^{(2006.01)}$  **G05B 19/418** $^{(2006.01)}$

(52) Cooperative Patent Classification (CPC):
**G05B 19/41875; B65H 63/00; B65H 63/006;**
B65H 2701/31; G05B 2219/45191;
G05B 2219/45193; G05B 2219/45239

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 20.09.2023 CN 202311219919

(71) Applicant: **Zhejiang Hengyi Petrochemical Co., Ltd.**
**Zhejiang 311200 (CN)**

(72) Inventors:
• **PENG, Xiantao**
  **Hangzhou, Zhejiang, 311200 (CN)**
• **QIU, Yibo**
  **Hangzhou, Zhejiang, 311200 (CN)**
• **WANG, Peng**
  **Hangzhou, Zhejiang, 311200 (CN)**
• **LIU, Mingyi**
  **Hangzhou, Zhejiang, 311200 (CN)**

(74) Representative: **Lavoix**
**Bayerstraße 83**
**80335 München (DE)**

(54) **PARAMETER PROCESSING METHOD AND APPARATUS, DEVICE AND STORAGE MEDIUM**

(57) Provided is a parameter processing method and apparatus, a device and a storage medium. The method includes: determining (S101) T full-winding rates of a yarn spindle wound by a winding machine; and under the condition where it is determined that M full-winding rates in the T full-winding rates do not meet a requirement of a preset full-winding rate, determining a candidate characteristic parameter set, wherein a candidate characteristic parameter included in the candidate characteristic parameter set is the characteristic parameter that is selected from N first characteristic parameters corresponding to a full-winding rate not meeting the requirement of the preset full-winding rate and that causes the full-winding rate not meeting not to meet the requirement of the preset full-winding rate.

Determine T full-winding rates of a yarn spindle wound by a winding machine — S101

Determine a candidate characteristic parameter set under the condition where it is determined that M full-winding rates in the T full-winding rates do not meet a requirement of a preset full-winding rate — S102

FIG. 1

EP 4 527 772 A1

**Description**

TECHNICAL FIELD

The present disclosure relates to a field of data processing technologies, and in particular, to a parameter processing method and apparatus, a device and a storage medium.

BACKGROUND

In the daily production process of a yarn spindle, a worker starts to perform sampling inspection on a full-winding rate of the yarn spindle along with completion of winding of the yarn spindle, and if a result of the sampling inspection cannot reach an expected target, the worker needs to analyze the parameters which may cause the full-winding rate not to reach the standard by virtue of experience and adjust the parameters. However, the mode has strong dependence on worker's experience, and cannot quickly determine the parameters which make the full-winding rate not reach the standard in the production process and cannot make adjustment in time, thereby influencing the production efficiency and the production quality.

SUMMARY

The present disclosure provides a parameter processing method and apparatus, a device and a storage medium to solve or mitigate one or more technical problems in the prior art.

According to a first aspect, provided in the present disclosure is a parameter processing method, including:

determining T full-winding rates of a yarn spindle wound by a winding machine, wherein the t-th full-winding rate in the T full-winding rates is obtained based on N first characteristic parameters collected at the t-th moment, and a first characteristic parameter in the N first characteristic parameters is a characteristic parameter that is able to influence on a full-winding rate of the yarn spindle wound by the winding machine; T is a positive integer more than or equal to 1; t is a positive integer more than or equal to 1 and less than or equal to T; and N is a positive integer more than or equal to 1; and

under the condition where it is determined that M full-winding rates in the T full-winding rates do not meet a requirement of a preset full-winding rate, determining a candidate characteristic parameter set, wherein a candidate characteristic parameter included in the candidate characteristic parameter set is the characteristic parameter that is selected from N first characteristic parameters corresponding to a full-winding rate not meeting the requirement of the preset full-winding rate and that causes the full-winding rate not meeting not to meet the requirement of the preset full-winding rate; and M is a positive integer more than or equal to 1 and less than or equal to T.

According to a second aspect, provided in the present disclosure is a parameter processing apparatus, including:

a result prediction unit, configured to determine T full-winding rates of a yarn spindle wound by a winding machine, wherein the t-th full-winding rate in the T full-winding rates is obtained based on N first characteristic parameters collected at the t-th moment; the first characteristic parameter in the N first characteristic parameters is a characteristic parameter that is able to influence on the full-winding rate of the yarn spindle wound by the winding machine; T is a positive integer more than or equal to 1; t is a positive integer more than or equal to 1 and less than or equal to T; and N is a positive integer more than or equal to 1; and

a parameter determining unit, configured to determine a candidate characteristic parameter set under the condition where it is determined that M full-winding rates in the T full-winding rates do not meet a requirement of a preset full-winding rate, wherein a candidate characteristic parameter included in the candidate characteristic parameter set is a characteristic parameter that is selected from N first characteristic parameters corresponding to a full-winding rate not meeting the requirement of the preset full-winding rate and that causes the full-winding rate not to meet the requirement of the preset full-winding rate; and M is a positive integer more than or equal to 1 and less than or equal to T.

According to a third aspect, provided is an electronic device, including:

at least one processor; and
a memory connected in communication with the at least one processor,
wherein the memory stores an instruction executable by the at least one processor, and the instruction, when executed by the at least one processor, enables the at least one processor to execute the method of any embodiment of the present disclosure.

According to a fourth aspect, provided is a non-transitory computer-readable storage medium storing a computer instruction thereon, wherein the computer instruction is used to cause a computer to execute the method of any embodiment of the present disclosure.

According to a fifth aspect, provided is a computer program product, including a computer program, wherein the computer program, when executed by a processor, executes the method of any embodiment of the present disclosure.

Therefore, the scheme of the disclosure can determine the T full-winding rates in the production process and a standard reaching condition of each of the T full-winding rates, so as to timely determine the candidate characteristic parameters causing the full-winding rate not to reach the standard under the condition that the standard reaching condition does not meet the requirement. As such, a situation that the full-winding rate of the yarn spindle may not reach the standard can be determined in time and efficiently in the production process of the yarn spindle and meanwhile the parameters of winding machine can be monitored in real time in process of production, so that a support is provided for automated adjustment of the winding machine in time in the subsequent process.

It should be understood that the content described in this part is not intended to identify critical or essential features of embodiments of the present disclosure, nor is it used to limit the scope of the present disclosure. Other features of the present disclosure will be easily understood through the following description.

BRIEF DESCRIPTION OF THE DRAWINGS

In the drawings, like reference characters designate like or similar parts or elements throughout the accompanying figures unless otherwise specified. The figures are not necessarily drawn to scale. It should be understood that these figures depict only some of the embodiments in accordance with the disclosure and are not to be considered limiting of the scope thereof.

FIG. 1 is a first flow chart schematically illustrating a parameter processing method according to an embodiment of the present disclosure.
FIG. 2 is a second flow chart schematically illustrating a parameter processing method according to an embodiment of the present disclosure.
FIG. 3 is a third flow chart schematically illustrating a parameter processing method according to an embodiment of the present disclosure.
FIG. 4 is a fourth flow chart schematically illustrating a parameter processing method according to an embodiment of the present disclosure.
FIG. 5 is a block diagram schematically illustrating a parameter processing apparatus according to an embodiment of the present disclosure.
FIG. 6 is a block diagram of an electronic device for implementing the parameter processing method according to the embodiments of the present disclosure.

DETAILED DESCRIPTION

The present disclosure will be further described in detail below with reference to the accompanying figures. In the figures, like reference numerals indicate functionally identical or similar elements. While various aspects of the embodiments are presented in the figures, the figures are not necessarily drawn to scale unless specifically indicated.

In addition, in order to better explain the present disclosure, numerous specific details will be given in the following specific implementations. Those having ordinary skill in the art should be understood that the present disclosure may be performed without certain specific details. In some examples, methods, means, elements and circuits well known to those having ordinary skill in the art are not described in detail, in order to highlight the subject matter of the present disclosure.

In the daily production of the yarn spindle, the machine for winding the yarn spindle may be affected by various factors such as the winding speed, the speed of the first thermal roller, the oil content, the interlacement pressure, the wind temperature and the wind pressure, so that the full-winding rate of the wound yarn spindle does not reach the expected target. In the existing process, after the winding of the yarn spindle is completed, a worker performs a random inspection on the full-winding rate of the yarn spindle, and if a result of the random inspection cannot reach an expected target, the worker needs to analyze and adjust parameters which may cause the full-winding rate not to reach the standard by virtue experience. However, the mode has strong dependence on worker's experience, and cannot quickly determine the parameters which make the full-winding rate not reach the standard in the production process and cannot make adjustment in time, thereby influencing the production efficiency and the production quality. Therefore, a method capable of quickly and timely determining the parameters that make the full-winding rate not reach the standard in the production process of the yarn spindle is urgently needed, so that the production quality can be improved.

Based on this, the present disclosure provides a parameter processing method to solve the above problems.

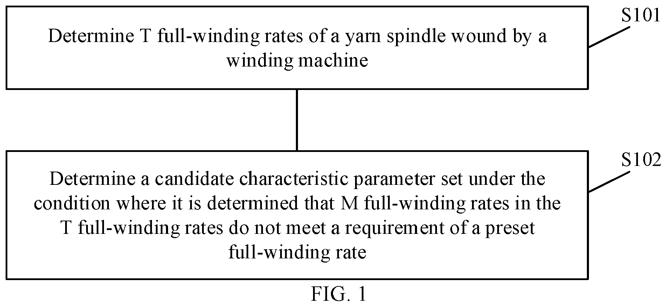

Specifically, FIG. 1 is a first flow chart schematically illustrating a parameter processing method according to an embodiment of the present disclosure. The method is optionally applied to an electronic device, such as a personal computer, a server and a server cluster.

Further, the method includes at least some of the following contents, as shown in FIG. 1, including:

Step S101: T full-winding rates of a yarn spindle wound by a winding machine are determined.

Here, the t-th full-winding rate in the T full-winding rates is obtained based on N first characteristic parameters collected at the t-th moment (for example, at the t-th moment in the production process), where T is a positive integer more than or equal to 1; t is a positive integer more than or equal to 1 and less than or equal to T.

It should be understood that the t-th full-winding rate is a full-winding rate of the winding machine corresponding to the t-th time in the production process.

Further, the first characteristic parameter in the N first characteristic parameters is a characteristic parameter that can influence on the full-winding rate of the yarn spindle wound by the winding machine; and N is a positive integer more than or equal to 1.

It should be noted that the N first characteristic parameters include, but are not limited to, at least one of spinning process parameters such as oil concentration, oil pump rotating speed, oil content, wind temperature, wind humidity, wind pressure, spinneret plate diameter, winding speed, speed of the first thermal roller (GR 1), temperature of the second thermal roller (GR 2), interlacement (comprising a pre-interlacement and a main interlacement) pressure, and start-up overfeed rate.

Step S102: under the condition where it is determined that M full-winding rates in the T full-winding rates do not meet a requirement of a preset full-winding rate, a candidate characteristic parameter set is determined.

Here, a candidate characteristic parameter included in the candidate characteristic parameter set is the characteristic parameter that is selected from N first characteristic parameters corresponding to a full-winding rate not meeting the requirement of the preset full-winding rate and that results in (or causes) the full-winding rate not meeting (or not to meet) the requirement of the preset full-winding rate; and M is a positive integer more than or equal to 1 and less than or equal to T.

In an example, the requirement of the preset full-winding rate may specifically include a full-winding rate being more than or equal to the preset full-winding rate. The preset full-winding-winding is an experience value which may be set as required. For example, a value of the preset full-winding rate is 95% or 98%, which is not limited in the present disclosure.

Further, in a specific example, the M is a positive integer more than or equal to a predetermined threshold and less than or equal to T. Here, the predetermined threshold is a positive integer more than or equal to 1 and less than or equal to T. For example, the value is taken to be an intermediate value within a range of [1, T], which can be set as required, which is not limited in the present disclosure.

Further, in an example, the M full-winding rates in the T full- winding rates can refer to: full-winding rates at M continuous moments or full-winding rates corresponding to M discontinuous moments, which is not limited in the present disclosure.

In a specific example, under the condition where it is determined that all the M full-winding rates in the T full-winding rates meet the requirement of the preset full-winding rate, the process is ended. Furthermore, after the process is ended, the T full-winding rates can be re-determined after a specified time is passed or a specified instruction is received, and be re-processed based on the method of the disclosure, so that the full-winding rate is monitored to quickly and timely locate the parameter which makes the full-winding rate not reach the standard and to lay the foundation for improving the production quality.

Therefore, the scheme of the disclosure can determine the T full-winding rates in the production process and a standard reaching condition of each of the T full-winding rates, so as to timely determine the candidate characteristic parameters causing the full-winding rate not to reach the standard under the condition that the standard reaching condition does not meet the requirement. As such, a situation that the full-winding rate of the yarn spindle may not reach the standard is determined in time and efficiently in the production process of the yarn spindle so that a support is provided for automated adjustment of a winding machine in time in the subsequent process.

Further, compared to the scheme that relies on the worker's experience to analyze afterwards the reason not up to the standard, the scheme of the disclosure does not need the worker's experience, and in the meanwhile, can also monitor or even adjust the parameters of winding machine in real time in process of production, such that the parameter monitoring or adjustment process of the winding machine are leading, and are automatic and intelligent. As such, a large amount of human cost and time cost can be saved, and then the production efficiency of yarn spindle has further been promoted while promoting production quality.

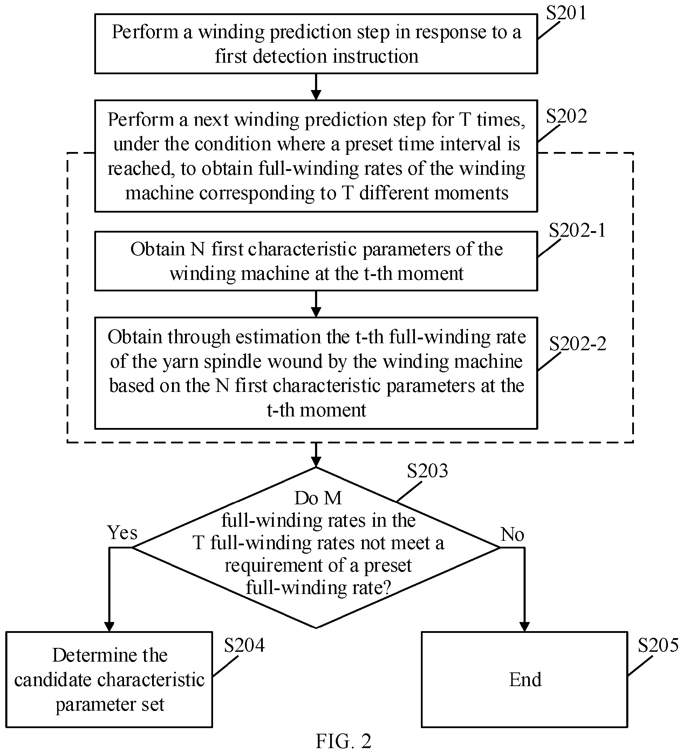

FIG. 2 is a second flow chart schematically illustrating a parameter processing method according to an embodiment of the present disclosure. The method is optionally applied to an electronic device, such as a personal computer, a server and a server cluster. It can be understood that the related contents in the method shown in FIG. 1 above can also be applied to this example, and the related contents will not be described in detail in this example.

Further, the method includes at least some of the following contents, as shown in FIG. 2, including:

Step S201: in response to a first detection instruction, a winding prediction step is performed.

In an example, the first detection instruction can be generated in the case where a task instruction for the production of the yarn spindle is received. For example, in the production process of the yarn spindle, the first detection command is generated.

Step S202: under the condition where a preset time interval is reached, a next winding prediction step is performed for T times to obtain full-winding rates of the winding machine corresponding to T different moments.

Here, the t-th winding prediction step specifically includes:

Step S202-1: obtaining N first characteristic parameters of the winding machine at the t-th moment; and
Step S202-2: obtaining through estimation the t-th full-winding rate of the yarn spindle wound by the winding machine based on the N first characteristic parameters at the t-th moment.

Here, the first characteristic parameter in the N first characteristic parameters is a characteristic parameter that can influence on the full-winding rate of the yarn spindle wound by the winding machine; T is a positive integer more than or equal to 1; t is a positive integer more than or equal to 1 and less than or equal to T; and N is a positive integer more than or equal to 1.

Further, in a specific example, the t-th full-winding rate of the yarn spindle wound by the winding machine can be obtained as follows; in particular, the obtaining through estimation the t-th full-winding rate of the yarn spindle wound by the winding machine based on the N first characteristic parameters at the t-th time (i.e., the above step S202-2) specifically includes:

inputting the N first characteristic parameters at the t-th moment into a target winding prediction model, to at least obtain a first prediction result output from a first branch of the target winding prediction model and corresponding to the t-th moment.

Here, the first branch of the target winding prediction model is configured to predict the full-winding rate of the yarn spindle wound by the winding machine; the first prediction result corresponding to the t-th moment includes a first value which represents a predicted full-winding rate of the yarn spindle wound by the winding machine; therefore, the method for efficiently predicting the full-winding rate can be provided, thereby quickly obtaining the full-winding rates corresponding to different moments, improving the processing efficiency, and providing support for subsequent judgment of whether parameters of the winding machine need to be adjusted.

Further, in a specific example, under the condition where the first prediction result which is output from the first branch of the target winding prediction model and corresponds to the t-th moment is obtained in the t-th winding prediction step, a second prediction result which is output from a second branch of the target winding prediction model and corresponds to the t-th moment can be also obtained.

Here, the second branch of the target winding prediction model is configured to predict a degree of influence of inputting each of the N first characteristic parameters at the t-th moment on the full-winding rate; and the second prediction result corresponding to the t-th moment includes N second values, and the n-th element in the N second values represents a degree of influence of inputting the n-th first characteristic parameter in the N first characteristic parameters at the t-th moment on the full-winding rate.

In other words, after the N first characteristic parameters at the t-th moment are input into the target winding prediction model, two parts of results are output, in which the first part of the results (i.e., the first prediction result) represents the full-winding rate corresponding to the t-th moment and the second part of the results (i.e., the second predicted result) represents the degree of influence of inputting each first characteristic parameter at the t-th moment on the full-winding rate.

For example, taking 5 first characteristic parameters $\{x_1, x_2, x_3, x_4, x_5\}$ at moment 1 as an example, the 5 first characteristic parameters are input to the target winding prediction model to obtain a first prediction result corresponding to moment 1 output from a first branch of the target winding prediction model and a second prediction result corresponding to the moment 1 output by a second branch of the target winding prediction model, which can be noted, for example, as $\{x_1: a_1, x_2: a_2, x_3: a_3, x_4: a_4, x_5: a_5\}$, wherein $a_1, a_2, a_3, a_4, a_5$ represent the second value, which specifically represents the degree of influence of the first characteristic parameters at the moment 1 on the full-winding rate.

It should be understood that $\{x_1: a_1, x_2: a_2, x_3: a_3, x_4: a_4, x_5: a_5\}$ in this example is only exemplary, and in practice, may be expressed by other ways, which are not limited by the present disclosure.

In addition, the target wrapping prediction model may be a neural network model, or may be other models with interpretable capability, which is not limited by the present disclosure.

Step S203: whether M full-winding rates in the T full-winding rates do not meet the requirement of the preset full-winding rate is judged, wherein if yes, the process proceeds to step S204; otherwise, the process proceeds to step S205.

Here, for the contents related to the M full-winding rates, reference can be made to the above example, and details are not repeated herein.

Step S204: under the condition where it is determined that the M full-winding rates in the T full-winding rates do not meet the requirement of the preset full-winding rate, the candidate characteristic parameter set is determined.

Here, a candidate characteristic parameter included in the candidate characteristic parameter set is a characteristic parameter that is selected from N first characteristic parameters corresponding to a full-winding rate not meeting the requirement of the preset full-winding rate and that causes the full-winding rate not to meet the requirement of the preset full-winding rate; and M is a positive integer more than or equal to 1 and less than or equal to T.

Step S205: the process is ended.

Therefore, the scheme of the disclosure provides a specific example of obtaining the T full-winding rates, and after the T full-winding rates are determined, whether the candidate parameter characteristic set needs to be determined or not is judged based on the standard reaching situation of each full-winding rate in the T full-winding rates, so that the parameter detection efficiency of the winding machine is effectively improved, the detection of the parameters is more automatic and intelligent, and the technical support is provided for smoothly automated adjustment of the winding machine in the subsequent process. Meanwhile, support is provided for improving the production quality and the production efficiency of the yarn spindle.

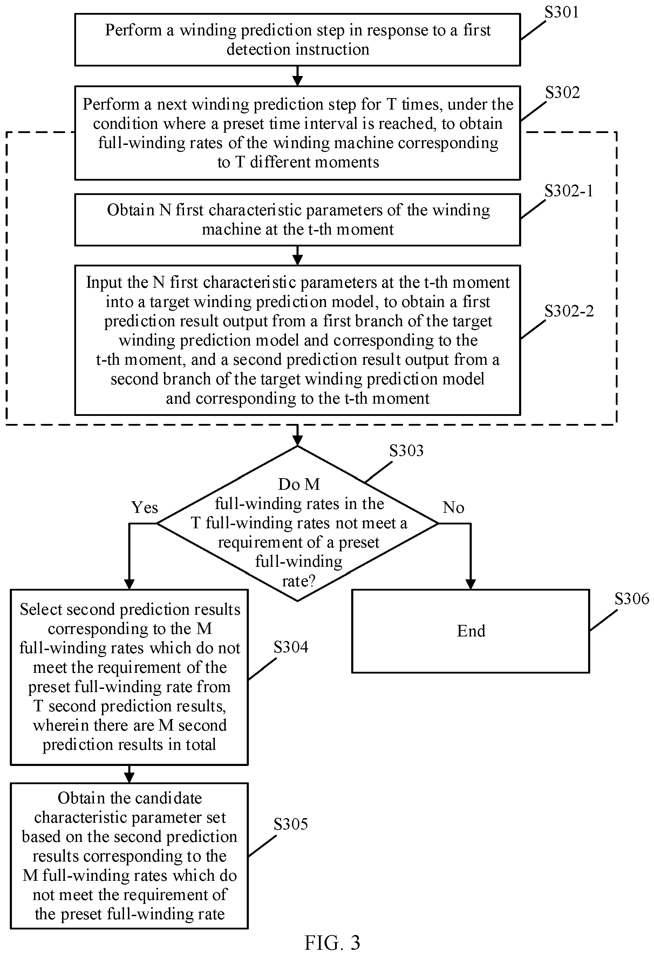

FIG. 3 is a third flow chart schematically illustrating a parameter processing method according to an embodiment of the present disclosure. The method is optionally applied to an electronic device, such as a personal computer, a server and a server cluster. It can be understood that the related contents of the methods shown in FIGS. 1 and 2 above can also be applied to this example, and the related contents will not be described in detail in this example.

Further, the method includes at least some of the following contents, as shown in FIG. 3, including:

Step S301: in response to a first detection instruction, a winding prediction step is performed.

Step S302: under the condition where a preset time interval is reached, a next winding prediction step is performed for T times to obtain full-winding rates of a winding machine corresponding to T different moments.

In an example, the t-th winding prediction step specifically includes:

Step S302-1: obtaining N first characteristic parameters of the winding machine at the t-th moment; and

Step S302-2: inputting the N first characteristic parameters at the t-th moment into a target winding prediction model to obtain a first prediction result output from a first branch of the target winding prediction model and corresponding to the t-th moment, and obtain a second prediction result output by a second branch of the target winding prediction model and corresponding to the t-th moment.

It should be understood that after T times of winding prediction, first prediction results corresponding to T different moments and second prediction results corresponding to T different moments are obtained.

Here, the first branch of the target winding prediction model is configured to predict the full-winding rate of the yarn spindle wound by the winding machine; the first prediction result corresponding to the t-th moment includes a first value which represents a predicted full-winding rate of the yarn spindle wound by the winding machine.

Further, the second branch of the target winding prediction model is configured to predict a degree of influence of inputting each of the N first characteristic parameters at the t-th moment on the full-winding rate; and the second prediction result corresponding to the t-th moment includes N second values, wherein the n-th element in the N second values represents a degree of influence of inputting the n-th first characteristic parameter in the N first characteristic parameters at the t-th moment on the full-winding rate.

Step S303: whether M full-winding rates in the T full-winding rates do not meet the requirement of the preset full-winding rate is judged, wherein if yes, the process proceeds to step S304; otherwise, the process proceeds to step S306.

Here, M is a positive integer more than or equal to 1 and less than or equal to T. For the contents related to the M full-winding rates, reference can be made to the above example, and details are not repeated herein.

Step S304: second prediction results corresponding to the M full-winding rates which do not meet the requirement of the preset full-winding rate are selected from T second prediction results, wherein there are M second prediction results in total; the process proceeds to step S305.

Here, the T second prediction results are obtained after T times of the winding prediction step.

Step S305: the candidate characteristic parameter set is obtained based on the second prediction results corresponding to the M full-winding rates which do not meet the requirement of the preset full-winding rate.

In a specific example, the candidate characteristic parameter set can be obtained in the following mode (for example, Mode I or Mode II); specifically, the obtaining the candidate characteristic parameter set based on the second prediction results corresponding to the M full-winding rates which do not meet the requirement of the preset full-winding rate (i.e., the above step S305) specifically includes:

Mode I: obtaining M groups of initial sets based on the second prediction results corresponding to the M full-winding rates which do not meet the requirement of the preset full-winding rate; and selecting the candidate characteristic parameters from the M groups of initial sets to obtain the candidate characteristic parameter set.

Here, an initial set in the M groups of initial sets contains a first characteristic parameter having a second value larger than a preset numerical value in the second prediction results corresponding to the full-winding rates which do not meet the requirement of the preset full-winding rate. In other words, the initial set contains primary first characteristic parameters that cause the full-winding rate not to meet the requirement of the preset full-winding rate.

Further, selecting the candidate characteristic parameters from the M groups of initial sets to obtain the candidate characteristic parameter set can specifically include: counting the number of occurrences of all elements contained in the M groups of initial sets, and selecting a preset number of target elements with larger occurrences as candidate characteristic parameters, wherein the preset number is a positive integer more than or equal to 1 and less than N.

For example, taking the second prediction results corresponding to 3 full-winding rates that do not meet the requirement of the preset full-winding rate as an example. At this point, the second prediction results corresponding to the full-winding rates that do not meet the requirement of the preset full-winding rate can be represented as follows: second prediction result -1: $\{x_1:0.7, x_2:0.4, x_3:0.55, x_4:0.1\}$, second prediction result -2: $\{x_1:0.6, x_2:0.45, x_3:0.4, x_4:0.5\}$, and second prediction result -3: $\{x_1:0.7, x_2:0.65, x_3:0.45, x_4:0.55\}$. At this time, the first characteristic parameters $x_1$, $x_3$ with the second value greater than the preset value of 0.5 are selected from the second prediction result -1 (which can be written as initial set -1: $\{x_1, x_3\}$), the first characteristic parameters $x_1$, $x_4$ with the second value greater than the preset value of 0.5 are selected from the second prediction result -2 (which can be written as the initial set -2: $\{x_1, x_4\}$), the first characteristic parameters $x_1$, $x_2$, $x_4$ with the second value greater than the preset value of 0.5 are selected from the second prediction result -3 (which can be written as the initial set -3: $\{x_1, x_2, x_4\}$), and a total of 3 initial sets are obtained.

Further, the number of occurrences of each element contained in the 3 initial sets is counted, to obtain the counted number of $x_1$ to be 3, the counted number of $x_4$ to be 2, and the counted number of $x_2$ and $x_3$ to be 1; at this point, the first 2 elements, $x_1$, $x_4$, which have larger statistic values are selected as the candidate characteristic parameters.

Mode II: obtaining a characteristic parameter matrix of M rows × N columns based on the second prediction results corresponding to the M full-winding rates which do not meet the requirement of the preset full-winding rate, wherein each row in the characteristic parameter matrix corresponds to N second values, and the second values of the same first characteristic parameter corresponding to different full-winding rates are located in the same column; weighting the columns in the characteristic parameter matrix to obtain a vector of 1 row × N columns; obtaining the candidate characteristic parameter set based on the vector of 1 row × N columns, wherein the vector of 1 row × N columns represents N third values; and obtaining the candidate characteristic parameter set based on the vector of 1 row × N columns.

For example, by taking an example where M takes a value of 3 (i.e., there are three full-winding rates that do not meet the requirement of the preset full-winding rate) and N takes a value of 4 (in total 4 first characteristic parameters captured at each moment), the second prediction results corresponding to the full-winding rates that do not meet the requirement of the preset full-winding rate can be written as: a second prediction result corresponding to the full-winding rate -1 (which can be written as $\{a_{11}, a_{12}, a_{13}, a_{14}\}$), a second prediction result corresponding to the full-winding rate -2 (which can be written as $\{a_{21}, a_{22}, a_{23}, a_{24}\}$), and a second prediction result corresponding to the full-winding rate -3 (which can be written as $\{a_{31}, a_{32}, a_{33}, a_{34}\}$), respectively, where $a$ denotes the second value, $a_{.1}$ denotes a degree of influence of the first characteristic parameter $x_1$ on the full-winding rate, $a_{.2}$ denotes a degree of influence of the first characteristic parameter $x_2$ on the full-winding rate, $a_{.3}$ denotes a degree of influence of the first characteristic parameter $x_3$ on the full-winding rate, and $a_{.4}$ denotes a degree of influence of the first characteristic parameter $x_4$ on the full-winding rate, and at this point, the characteristic parameter matrix with 3 rows × 4 columns can be obtained as:

$$\begin{array}{cc} \text{4 first characteristic parameters} & \begin{array}{cccc} x_1 & x_2 & x_3 & x_4 \end{array} \\ \begin{bmatrix} second\ prediction\ result\ corresponding\ to\ full-winding\ rate-1 \\ second\ prediction\ result\ corresponding\ to\ full-winding\ rate-2 \\ second\ prediction\ result\ corresponding\ to\ full-winding\ rate-3 \end{bmatrix} = & \begin{bmatrix} a_{11} & a_{12} & a_{13} & a_{14} \\ a_{21} & a_{22} & a_{23} & a_{24} \\ a_{31} & a_{32} & a_{33} & a_{34} \end{bmatrix} \end{array}$$

Further, the second value of each column in the characteristic parameter matrix is weighted, for example, to obtain:

$$\tilde{a}_1 = (b_1 \cdot a_{11} + b_2 \cdot a_{21} + b_3 \cdot a_{31})/3,$$

$$\tilde{a}_2 = (b_1 \cdot a_{12} + b_2 \cdot a_{22} + b_3 \cdot a_{32})/3,$$

$$\tilde{a}_3 = (b_1 \cdot a_{13} + b_2 \cdot a_{23} + b_3 \cdot a_{33})/3,$$

$$\tilde{a}_4 = (b_1 \cdot a_{14} + b_2 \cdot a_{24} + b_3 \cdot a_{34})/3,$$

wherein, $b_1$ denotes the full-winding rate -1, $b_2$ denotes the full-winding rate -2, and $b_3$ denotes the full-winding rate -3.

In this way, 4 third values are obtained and can be represented by a vector of 1 row × 4 columns which can be denoted as $[\tilde{a}_1, \tilde{a}_2, \tilde{a}_3, \tilde{a}_4]$, for example.

Further, obtaining the candidate characteristic parameter set based on the vector of 1 row × N columns can specifically include: selecting a preset number (such as N/2) of first characteristic parameters with a larger third value from the vectors of 1 row × N columns as candidate characteristic parameters; the preset number is a positive integer more than or equal to 1 and less than N.

Step S306: the process is ended.

Therefore, the scheme of the disclosure provides a specific example of characteristic prediction, so that important parameters which cause the full-winding rate not to reach the standard can be efficiently determined, the parameter detection efficiency of the winding machine is effectively improved, and the technical support is provided for smoothly automated adjustment of the winding machine in the subsequent process. Meanwhile, support is provided for improving the production quality and the production efficiency of the yarn spindle.

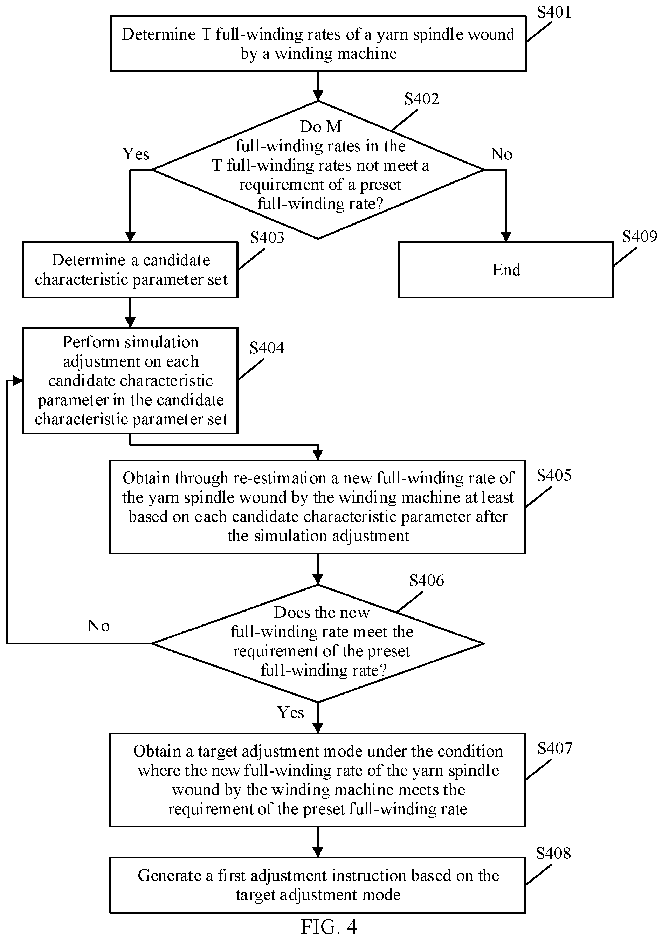

FIG. 4 is a fourth flow chart schematically illustrating a parameter processing method according to an embodiment of the present disclosure. The method is optionally applied to an electronic device, such as a personal computer, a server and a server cluster. It can be understood that the related contents of the methods shown in FIGS. 1 to 3 above can also be applied to this example, and the related contents will not be described in detail in this example.

Further, the method includes at least some of the following contents, as shown in FIG. 4, including:
Step S401: T full-winding rates of a yarn spindle wound by a winding machine are determined.

Here, the t-th full-winding rate of the T full-winding rates is obtained based on N first characteristic parameters collected at the t-th moment; the first characteristic parameter in the N first characteristic parameters is a characteristic parameter that can influence on the full-winding rate of the yarn spindle wound by the winding machine; T is a positive integer more than or equal to 1; t is a positive integer more than or equal to 1 and less than or equal to T; and N is a positive integer more than or equal to 1.

Here, for the related content of the first characteristic parameter, reference may be made to the above example, and details are not repeated herein.

Step S402: whether M full-winding rates in the T full-winding rates do not meet the requirement of the preset full-winding rate is judged, wherein if yes, the process proceeds to step S403; otherwise, the process proceeds to step S409.

Step S403: under the condition where it is determined that the M full-winding rates in the T full-winding rates do not meet the requirement of the preset full-winding rate, a candidate characteristic parameter set is determined, and the process proceeds to step S404.

Here, a candidate characteristic parameter included in the candidate characteristic parameter set is a characteristic parameter that is selected from N first characteristic parameters corresponding to a full-winding rate not meeting the requirement of the preset full-winding rate and that causes the full-winding rate not to meet the requirement of the preset full-winding rate; and M is a positive integer more than or equal to 1 and less than or equal to T. Further, for the contents related to the M full-winding rates and the requirement of the preset full-winding rate, reference can be made to the above example, and details are not repeated herein.

Step S404: simulation adjustment is performed on each candidate characteristic parameter in the candidate characteristic parameter set, and the process proceeds to step S405.

It should be noted that the simulation adjustment refers to performing numerical adjustment on the candidate characteristic parameters in the candidate characteristic parameter set to predict the full-winding rate based on the adjusted characteristic parameters again, so as to determine an adjustment mode capable of improving the full-winding rate and enabling the full-winding rate to meet the requirement of the preset full-winding rate.

Step S405: a new full-winding rate of the yarn spindle wound by the winding machine is obtained through re-estimation at least based on each candidate characteristic parameter after the simulation adjustment, and the process proceeds to step S406.

For instance, in the example, each candidate characteristic parameter after the simulation adjustment and the first characteristic parameters other than the candidate characteristic parameters collected at the collection time of the candidate characteristic parameters may be input again to the target winding prediction model to predict the full-winding rate.

Step S406: whether the new full-winding rate of the yarn spindle wound by the winding machine meets the requirement of the preset full-winding rate is judged, wherein if yes, the process proceeds to step S407; otherwise, the process returns to step S404 to perform the simulation adjustment on each candidate characteristic parameter in the candidate characteristic parameter set again.

Step S407: a target adjustment mode is obtained under the condition where the new full-winding rate of the yarn spindle wound by the winding machine meets the requirement of the preset full-winding rate, and the process proceeds to step S408.

Step S408: a first adjustment instruction is generated based on the target adjustment mode.

Here, the first adjustment instruction is configured to instruct to physically adjust each candidate characteristic parameter in the candidate characteristic parameter set of the winding machine according to the target adjustment mode.

Step S409: the process is ended.

In this way, the scheme of the disclosure provides a specific example of carrying out automated adjustment to the parameters of winding machine. As such, it is possible to monitor or even adjust the parameters of winding machine in real time in process of production, such that the parameter monitoring or the adjustment process of the winding machine are leading, and automatic and intelligent; and moreover, a large amount of human costs and time cost can be saved, and then the production efficiency of yarn spindle has further been promoted while promoting production quality.

In summary, the disclosure provides a parameter processing method, which has the following advantages compared to the existing art which specifically include:

> Firstly, more timely response. Compared to the scheme that relies on the worker's experience to analyze afterwards the reason not up to the standard, the scheme of the disclosure can quickly determine the characteristic parameters causing the full-winding rate not to reach the standard by predicting the full-winding rate in the production process of the yarn spindle once the full-winding rate is detected not to reach the standard, with a higher response speed. The scheme does not need to depend on worker's experience, and in the meanwhile, can also monitor or even adjust the parameters of winding machine in real time in process of production.
>
> Secondly, more automated. Compared to the technical scheme after the event, the scheme of the disclosure can quickly determine the characteristic parameters causing the full-winding rate not to reach the standard in the production process of the yarn spindle and can make the parameter adjustment mode timely, such that the full-winding rate of the yarn spindle wound by the winding machine meets the production standard, and improved automation and intellectualization are achieved. Accordingly, a large amount of human cost and time cost can be saved.
>
> Thirdly, improvement on production efficiency and the production quality. Compared to the existing art, the parameter monitoring or adjustment process of the winding machine in the scheme of the disclosure are leading, and are automatic and intelligent. As such, a large amount of human cost and time cost can be saved, and then the production efficiency of yarn spindle has further been promoted while promoting production quality.

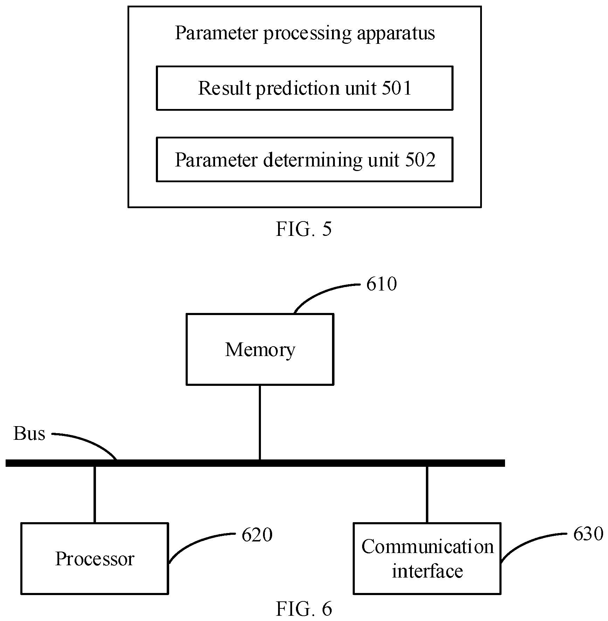

The present disclosure further provides a parameter processing apparatus, as shown in FIG. 5, including:

> a result prediction unit 501, configured to determine T full-winding rates of a yarn spindle wound by a winding machine, wherein the t-th full-winding rate in the T full-winding rates is obtained based on N first characteristic parameters collected at the t-th moment; the first characteristic parameter in the N first characteristic parameters is a characteristic parameter that can influence on the full-winding rate of the yarn spindle wound by the winding machine; T is a positive integer more than or equal to 1; t is a positive integer more than or equal to 1 and less than or equal to T; and N is a positive integer more than or equal to 1; and
> a parameter determining unit 502, configured to determine a candidate characteristic parameter set under the condition where it is determined that M full-winding rates in the T full-winding rates do not meet a requirement of a preset full-winding rate, wherein a candidate characteristic parameter included in the candidate characteristic parameter set is a characteristic parameter that is selected from N first characteristic parameters corresponding to a full-winding rate not meeting the requirement of the preset full-winding rate and that causes the full-winding rate not to meet the requirement of the preset full-winding rate; and M is a positive integer more than or equal to 1 and less than or equal to T.

In a specific example of the disclosure, the result prediction unit is specifically configured to:

> perform a winding prediction step in response to a first detection instruction; and
> under the condition where a preset time interval is reached, perform a next winding prediction step for T times to obtain full-winding rates of the winding machine corresponding to T different moments;
> wherein the t-th winding prediction step includes:

> > obtaining N first characteristic parameters of the winding machine at the t-th moment; and
> > obtaining through estimation the t-th full-winding rate of the yarn spindle wound by the winding machine based on the N first characteristic parameters at the t-th moment.

In a specific example of the disclosure, the result prediction unit is specifically configured to:

input the N first characteristic parameters at the t-th moment into a target winding prediction model, to at least obtain a first prediction result output from a first branch of the target winding prediction model and corresponding to the t-th moment,

wherein the first branch of the target winding prediction model is configured to predict the full-winding rate of the yarn spindle wound by the winding machine; the first prediction result corresponding to the t-th moment includes a first value which represents a predicted full-winding rate of the yarn spindle wound by the winding machine.

In a specific example of the disclosure, the result prediction unit is further configured to:

under the condition where the first prediction result which is output from the first branch of the target winding prediction model and corresponds to the t-th moment is obtained in the t-th winding prediction step, obtain a second prediction result which is output from a second branch of the target winding prediction model and corresponds to the t-th moment, wherein the second branch of the target winding prediction model is configured to predict a degree of influence of inputting each of the N first characteristic parameters at the t-th moment on the full-winding rate; and the second prediction result corresponding to the t-th moment includes N second values, and the n-th element in the N second values represents a degree of influence of inputting the n-th first characteristic parameter in the N first characteristic parameters at the t-th moment on the full-winding rate.

In a specific example of the disclosure, the parameter determining unit is specifically configured to:

select second prediction results corresponding to the M full-winding rates which do not meet the requirement of the preset full-winding rate from T second prediction results, wherein the T second prediction results are obtained after T times of the winding prediction step; and
obtain the candidate characteristic parameter set based on the second prediction results corresponding to the M full-winding rates which do not meet the requirement of the preset full-winding rate.

In a specific example of the disclosure, the parameter determining unit is specifically configured to:

obtain M groups of initial sets based on the second prediction results corresponding to the M full-winding rates which do not meet the requirement of the preset full-winding rate, wherein an initial set in the M groups of initial sets contains a first characteristic parameter having a second value larger than a preset numerical value in the second prediction results corresponding to the full-winding rates which do not meet the requirement of the preset full-winding rate; and select the candidate characteristic parameters from the M groups of initial sets to obtain the candidate characteristic parameter set.

In a specific example of the disclosure, the parameter determining unit is specifically configured to:

obtain a characteristic parameter matrix of M rows $\times$ N columns based on the second prediction results corresponding to the M full-winding rates which do not meet the requirement of the preset full-winding rate, wherein each row in the characteristic parameter matrix corresponds to N second values, and the second values of the same first characteristic parameter corresponding to different full-winding rates are located in the same column; weight the columns in the characteristic parameter matrix to obtain a vector of 1 row $\times$ N columns, wherein the vector of 1 row $\times$ N columns represents N third values; and
obtain the candidate characteristic parameter set based on the vector of 1 row $\times$ N columns.

In a specific example of the disclosure, the parameter processing apparatus further includes a parameter adjusting unit,

wherein the parameter adjusting unit is configured to perform simulation adjustment on each candidate characteristic parameter in the candidate characteristic parameter set;
the result prediction unit is further configured to obtain through re-estimation a new full-winding rate of the yarn spindle wound by the winding machine at least based on each candidate characteristic parameter after the simulation adjustment; and
the parameter adjusting unit is further configured to obtain a target adjustment mode under the condition where the new full-winding rate of the yarn spindle wound by the winding machine meets the requirement of the preset full-winding rate.

In a specific example of the disclosure, the parameter adjusting unit is further configured to:

generate a first adjustment instruction based on the target adjustment mode, wherein the first adjustment instruction is configured to instruct to physically adjust each candidate characteristic parameter in the candidate characteristic parameter set of the winding machine according to the target adjustment mode.

In a specific example of the disclosure, the parameter adjusting unit is further configured to perform the simulation adjustment on each of the candidate characteristic parameters again under the condition where the new full-winding rate of the yarn spindle wound by the winding machine does not meet the requirement of the preset full-winding rate; and

the result prediction unit is further configured to determine a new full-winding rate after performing the simulation adjustment on each candidate characteristic parameter in the candidate characteristic parameter set again, and judge whether the new full-winding rate meets the requirement of the preset full-winding rate.

For a description of specific functions and examples of each unit of the apparatus according to the embodiment of the present disclosure, reference can be made to the related description of the corresponding steps in the foregoing method embodiments, and details thereof will not be repeated herein.

FIG. 6 is a block diagram of an electronic device according to an embodiment of the present disclosure. As shown in FIG. 6, the electronic device includes: a memory 610 and a processor 620, the memory 610 storing therein a computer program operable on the processor 620. The number of the memory 610 and the processor 620 may be one or more. The memory 610 may store one or more computer programs that, when executed by the electronic device, cause the electronic device to perform the methods according to the above-described method embodiments. The electronic device may further include: the communication interface 630 is used for communicating with an external device to perform data interactive transmission.

If the memory 610, the processor 620, and the communication interface 630 are implemented independently, the memory 610, the processor 620, and the communication interface 630 may connect to and communicate with each other through a bus. The bus may be an Industry Standard Architecture (ISA) bus, a Peripheral Component Interconnect (PCI) bus, an Extended ISA (EISA) bus, or the like. The bus may be divided into an address bus, a data bus, a control bus, for example. For sake of illustration, the bus is represented by only one thick line in FIG. 6, but it does not mean only one bus or one type of bus is provided.

Optionally, in an implementation, if the memory 610, the processor 620, and the communication interface 630 are integrated on a chip, the memory 610, the processor 620, and the communication interface 630 may communicate with each other through an internal interface.

It should be understood that the processor may be a Central Processing Unit (CPU) or other general-purpose processor, a Digital Signal Processing (DSP), an Application Specific Integrated Circuit (ASIC), a Field Programmable Gate Array (FPGA) or other programmable logic device, discrete gate or transistor logic device or discrete hardware components, for example. The general-purpose processor may be a microprocessor or any conventional processor. It is noted that the processor may be a processor supporting Advanced RISC Machine (ARM) architecture.

Further, optionally, the memory may include a read-only memory and a random access memory, and may further include a nonvolatile random access memory. The memory may be a volatile memory or a nonvolatile memory, or may include both the volatile and the nonvolatile memory. The non-volatile memory may include a Read-Only Memory (ROM), a Programmable ROM (PROM), an Erasable PROM (EPROM), an Electrically EPROM (EEPROM), or a flash Memory. The volatile memory may include a Random Access Memory (RAM), which acts as an external cache memory. By way of example and not limitation, many forms of RAM are available, such as Static RAM (SRAM), Dynamic Random Access Memory (DRAM), Synchronous DRAM (SDRAM), Double Data Rate SDRAM (DDR SDRAM), Enhanced SDRAM (ESDRAM), Synchlink DRAM (SLDRAM), and Direct RAMBUS RAM (DR RAM).

The above embodiments may be implemented in whole or in part by software, hardware, firmware, or any combination thereof. When implemented in software, they may be implemented in whole or in part in the form of a computer program product. The computer program product includes one or more computer instruction. The computer instruction, when loaded and executed on a computer, can all or partially generate the flows or functions described in accordance with the embodiments of the disclosure. The computer may be a general-purpose computer, a special purpose computer, a network of computers, or other programmable devices. The computer instruction can be stored in a computer-readable storage medium or transmitted from one computer-readable storage medium to another computer-readable storage medium. For example, the computer instruction can be transmitted from one website, computer, server, or data center to another website, computer, server, or data center via wire (e.g., coaxial cable, fiber optic or Digital Subscriber Line (DSL)) or wireless (e.g., infrared, Bluetooth of microwave). The computer-readable storage medium can be any available medium that can be accessed by a computer or a data storage device, such as a server and a data center, that includes one or more available medium integration. The available medium may be a magnetic medium (e.g., floppy Disk, hard Disk, magnetic tape), an optical medium (e.g., Digital Versatile Disk (DVD)), or a semiconductor medium (e.g., Solid State Disk (SSD)), for example. It should be noted that the computer-readable storage medium referred to in the disclosure can be non-volatile storage medium, i.e., non-transitory storage medium.

It will be understood by those skilled in the art that all or part of the steps for performing the above embodiments may be implemented by hardware, or may be implemented by a program instructing relevant hardware, where the program may be stored in a computer-readable storage medium, and the storage medium may be a read-only memory, a magnetic disk or an optical disk.

In the description of the embodiments of the present disclosure, the description with reference to the terms such as "one embodiment", "some embodiments", "an example", "a specific example" or "some examples" means that a particular feature, structure, material, or characteristic described in connection with the embodiment or example is included in at least one embodiment or example of the present disclosure. Furthermore, the particular features, structures, materials, or characteristics described may be combined in any suitable manner in any one or more embodiments or examples. Moreover, various embodiments or examples and features in various embodiments or examples described in this specification can be combined and grouped by one skilled in the art if there is no mutual conflict.

In the description of the embodiments of the present disclosure, the sign "/" indicates a meaning of "or", for example, A/B indicates a meaning of A or B, unless otherwise specified. The term "and/or" herein is merely an association relationship describing associated objects, and means that there may be three relationships, for example, A and/or B may mean: A alone, both A and B, and B alone.

In the description of the embodiments of the present disclosure, the terms "first" and "second" are used for descriptive purposes only and should not be construed as indicating or implying relative importance or implicitly indicating the number of technical features as indicated. Thus, a feature defined as "first" or "second" may explicitly or implicitly include one or more features. In the description of the embodiments of the present disclosure, "a plurality" means two or more unless otherwise specified.

The above description is intended only to illustrate embodiments of the present disclosure, and should not be taken as limiting thereof, and any modifications, equivalents and improvements made within the principle of the present disclosure will fall within the scope of the present disclosure.

**Claims**

1. A parameter processing method, **characterized by** comprising:

   determining (S101) T full-winding rates of a yarn spindle wound by a winding machine, wherein the t-th full-winding rate in the T full-winding rates is obtained based on N first characteristic parameters collected at the t-th moment, and a first characteristic parameter in the N first characteristic parameters is a characteristic parameter that is able to influence on a full-winding rate of the yarn spindle wound by the winding machine; T is a positive integer more than or equal to 1; t is a positive integer more than or equal to 1 and less than or equal to T; and N is a positive integer more than or equal to 1; and
   determining (S102) a candidate characteristic parameter set under the condition where it is determined that M full-winding rates in the T full-winding rates do not meet a requirement of a preset full-winding rate, wherein a candidate characteristic parameter included in the candidate characteristic parameter set is the characteristic parameter that is selected from N first characteristic parameters corresponding to a full-winding rate not meeting the requirement of the preset full-winding rate and that causes the full-winding rate not meeting not to meet the requirement of the preset full-winding rate; and M is a positive integer more than or equal to 1 and less than or equal to T.

2. The method of claim 1, wherein determining (S101) the T full-winding rates of the yarn spindle wound by the winding machine comprises:

   performing (S201) a winding prediction step in response to a first detection instruction; and
   performing (S202) a next winding prediction step for T times, under the condition where a preset time interval is reached, to obtain full-winding rates of the winding machine corresponding to T different moments;
   wherein the t-th winding prediction step comprises:

   obtaining (S202-1) N first characteristic parameters of the winding machine at the t-th moment; and
   obtaining (S202-2) through estimation the t-th full-winding rate of the yarn spindle wound by the winding machine based on the N first characteristic parameters at the t-th moment.

3. The method of claim 2, wherein obtaining (S202-2) through estimation the t-th full-winding rate of the yarn spindle wound by the winding machine based on the N first characteristic parameters at the t-th moment comprises:

inputting (S203-2) the N first characteristic parameters at the t-th moment into a target winding prediction model, to at least obtain a first prediction result output from a first branch of the target winding prediction model and corresponding to the t-th moment,
wherein the first branch of the target winding prediction model is configured to predict the full-winding rate of the yarn spindle wound by the winding machine; the first prediction result corresponding to the t-th moment includes a first value which represents a predicted full-winding rate of the yarn spindle wound by the winding machine.

4. The method of claim 3, wherein the t-th winding prediction step further comprises:

under the condition where the first prediction result which is output from the first branch of the target winding prediction model and corresponds to the t-th moment is obtained in the t-th winding prediction step, obtaining a second prediction result output from a second branch of the target winding prediction model and corresponding to the t-th moment;
wherein the second branch of the target winding prediction model is configured to predict a degree of influence of inputting each of the N first characteristic parameters at the t-th moment on the full-winding rate; and the second prediction result corresponding to the t-th moment includes N second values, and the n-th element in the N second values represents a degree of influence of inputting the n-th first characteristic parameter in the N first characteristic parameters at the t-th moment on the full-winding rate.

5. The method of claim 4, wherein determining the candidate characteristic parameter set comprises:

selecting (S304) second prediction results corresponding to the M full-winding rates which do not meet the requirement of the preset full-winding rate from T second prediction results, wherein the T second prediction results are obtained after T times of the winding prediction step; and
obtaining (S305) the candidate characteristic parameter set based on the second prediction results corresponding to the M full-winding rates which do not meet the requirement of the preset full-winding rate.

6. The method of claim 5, wherein obtaining (S305) the candidate characteristic parameter set based on the second prediction results corresponding to the M full-winding rates which do not meet the requirement of the preset full-winding rate comprises:

obtaining M groups of initial sets based on the second prediction results corresponding to the M full-winding rates which do not meet the requirement of the preset full-winding rate, wherein an initial set in the M groups of initial sets contains a first characteristic parameter having a second value larger than a preset numerical value in the second prediction results corresponding to the full-winding rates which do not meet the requirement of the preset full-winding rate; and
selecting the candidate characteristic parameters from the M groups of initial sets to obtain the candidate characteristic parameter set.

7. The method of claim 5, wherein obtaining the candidate characteristic parameter set based on the second prediction results corresponding to the M full-winding rates which do not meet the requirement of the preset full-winding rate comprises:

obtaining a characteristic parameter matrix of M rows $\times$ N columns based on the second prediction results corresponding to the M full-winding rates which do not meet the requirement of the preset full-winding rate, wherein each row in the characteristic parameter matrix corresponds to N second values, and the second values of the same first characteristic parameter corresponding to different full-winding rates are located in the same column;
weighting the columns in the characteristic parameter matrix to obtain a vector of 1 row $\times$ N columns, wherein the vector of 1 row $\times$ N columns represents N third values; and
obtaining the candidate characteristic parameter set based on the vector of 1 row $\times$ N columns.

8. The method of any one of claims 3 to 7, wherein after determining (S403) the candidate characteristic parameter set, the method further comprises:

performing (S404) simulation adjustment on each candidate characteristic parameter in the candidate characteristic parameter set;

obtaining (S405) through re-estimation a new full-winding rate of the yarn spindle wound by the winding machine at least based on each candidate characteristic parameter after the simulation adjustment; and

obtaining (S407) a target adjustment mode under the condition where the new full-winding rate of the yarn spindle wound by the winding machine meets the requirement of the preset full-winding rate.

9. The method of claim 8, further comprising:

generating (S408) a first adjustment instruction based on the target adjustment mode, wherein the first adjustment instruction is configured to instruct to physically adjust each candidate characteristic parameter in the candidate characteristic parameter set of the winding machine according to the target adjustment mode.

10. The method of claim 8 or 9, further comprising:

under the condition where the new full-winding rate of the yarn spindle wound by the winding machine does not meet the requirement of the preset full-winding rate, performing the simulation adjustment on each candidate characteristic parameter in the candidate characteristic parameter set again to determine the new full-winding rate, and judging (S406) whether the new full-winding rate meets the requirement of the preset full-winding rate.

11. A parameter processing apparatus, **characterized by** comprising:

a result prediction unit (501), configured to determine T full-winding rates of a yarn spindle wound by a winding machine, wherein the t-th full-winding rate in the T full-winding rates is obtained based on N first characteristic parameters collected at the t-th moment; the first characteristic parameter in the N first characteristic parameters is a characteristic parameter that is able to influence on the full-winding rate of the yarn spindle wound by the winding machine; T is a positive integer more than or equal to 1; t is a positive integer more than or equal to 1 and less than or equal to T; and N is a positive integer more than or equal to 1; and

a parameter determining unit (502), configured to determine a candidate characteristic parameter set under the condition where it is determined that M full-winding rates in the T full-winding rates do not meet a requirement of a preset full-winding rate, wherein a candidate characteristic parameter included in the candidate characteristic parameter set is a characteristic parameter that is selected from N first characteristic parameters corresponding to a full-winding rate not meeting the requirement of the preset full-winding rate and that causes the full-winding rate not to meet the requirement of the preset full-winding rate; and M is a positive integer more than or equal to 1 and less than or equal to T.

12. The apparatus of claim 11, wherein the result prediction unit (501) is configured to:

perform a winding prediction step in response to a first detection instruction; and

under the condition where a preset time interval is reached, perform a next winding prediction step for T times to obtain full-winding rates of the winding machine corresponding to T different moments;

wherein the t-th winding prediction step includes:

obtaining N first characteristic parameters of the winding machine at the t-th moment; and

obtaining through estimation the t-th full-winding rate of the yarn spindle wound by the winding machine based on the N first characteristic parameters at the t-th moment.

13. The apparatus of claim 12, wherein the result prediction unit (501) is configured to:

input the N first characteristic parameters at the t-th moment into a target winding prediction model, to at least obtain a first prediction result output from a first branch of the target winding prediction model and corresponding to the t-th moment,

wherein the first branch of the target winding prediction model is configured to predict the full-winding rate of the yarn spindle wound by the winding machine; the first prediction result corresponding to the t-th moment includes a first value which represents a predicted full-winding rate of the yarn spindle wound by the winding machine.

14. The apparatus of claim 13, wherein the result prediction unit (501) is further configured to:

under the condition where the first prediction result which is output from the first branch of the target winding prediction model and corresponds to the t-th moment is obtained in the t-th winding prediction step, obtain a second prediction result which is output from a second branch of the target winding prediction model and corresponds to the t-th moment,

wherein the second branch of the target winding prediction model is configured to predict a degree of influence of inputting each of the N first characteristic parameters at the t-th moment on the full-winding rate; and the second prediction result corresponding to the t-th moment includes N second values, and the n-th element in the N second values represents a degree of influence of inputting the n-th first characteristic parameter in the N first characteristic parameters at the t-th moment on the full-winding rate.

15. A non-transitory computer-readable storage medium storing a computer instruction thereon, wherein the computer instruction is used to cause a computer to execute the method of any one of claims 1 to 10.

Determine T full-winding rates of a yarn spindle wound by a winding machine — S101

Determine a candidate characteristic parameter set under the condition where it is determined that M full-winding rates in the T full-winding rates do not meet a requirement of a preset full-winding rate — S102

FIG. 1

| Perform a winding prediction step in response to a first detection instruction | S201 |

| Perform a next winding prediction step for T times, under the condition where a preset time interval is reached, to obtain full-winding rates of the winding machine corresponding to T different moments | S202 |

| Obtain N first characteristic parameters of the winding machine at the t-th moment | S202-1 |

| Obtain through estimation the t-th full-winding rate of the yarn spindle wound by the winding machine based on the N first characteristic parameters at the t-th moment | S202-2 |

S203

Do M full-winding rates in the T full-winding rates not meet a requirement of a preset full-winding rate?

Yes

No

| Determine the candidate characteristic parameter set | S204 |

| End | S205 |

FIG. 2

Perform a winding prediction step in response to a first detection instruction

S301

Perform a next winding prediction step for T times, under the condition where a preset time interval is reached, to obtain full-winding rates of the winding machine corresponding to T different moments

S302

Obtain N first characteristic parameters of the winding machine at the t-th moment

S302-1

Input the N first characteristic parameters at the t-th moment into a target winding prediction model, to obtain a first prediction result output from a first branch of the target winding prediction model and corresponding to the t-th moment, and a second prediction result output from a second branch of the target winding prediction model and corresponding to the t-th moment

S302-2

S303

Do M full-winding rates in the T full-winding rates not meet a requirement of a preset full-winding rate?

Yes

No

Select second prediction results corresponding to the M full-winding rates which do not meet the requirement of the preset full-winding rate from T second prediction results, wherein there are M second prediction results in total

S304

End

S306

Obtain the candidate characteristic parameter set based on the second prediction results corresponding to the M full-winding rates which do not meet the requirement of the preset full-winding rate

S305

FIG. 3

FIG. 4

Parameter processing apparatus

Result prediction unit 501

Parameter determining unit 502

FIG. 5

610

Memory

Bus

Processor 620

Communication interface 630

FIG. 6

Europäisches
Patentamt

European
Patent Office

Office européen
des brevets

**EUROPEAN SEARCH REPORT**

Application Number

EP 24 17 9621

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 170 076 A1 (RIETER AG MASCHF [CH]) 26 April 2023 (2023-04-26) | 1-8, 12-15 | INV.<br>B65H63/00<br>D01H13/32<br>G05B13/04<br>G05B19/418 |
| A | * paragraphs [0011] - [0032] * <br>- - - - - | 9 | |
| A | WO 2019/243125 A1 (OERLIKON TEXTILE GMBH & CO KG [DE]) 26 December 2019 (2019-12-26)<br>* claims 1-12 *<br>- - - - - | 1-15 | |

TECHNICAL FIELDS
SEARCHED      (IPC)

B65H
G05B
D01H

The present search report has been drawn up for all claims

| Place of search | Date of completion of the search | Examiner |
|---|---|---|
| The Hague | 30 October 2024 | Pussemier, Bart |

EPO FORM 1503 03.82 (P04C01)

## ANNEX TO THE EUROPEAN SEARCH REPORT
## ON EUROPEAN PATENT APPLICATION NO.

EP 24 17 9621

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2024

| Patent document cited in search report | Publication date | Patent family member(s) | Publication date |
|---|---|---|---|
| EP 4170076 A1 | 26-04-2023 | CN 118414457 A<br>EP 4170076 A1<br>EP 4419743 A1<br>WO 2023066544 A1 | 30-07-2024<br>26-04-2023<br>28-08-2024<br>27-04-2023 |
| WO 2019243125 A1 | 26-12-2019 | CN 112334402 A<br>DE 112019003089 A5<br>WO 2019243125 A1 | 05-02-2021<br>04-03-2021<br>26-12-2019 |

EPO FORM P0459

For more details about this annex : see Official Journal of the European Patent Office, No. 12/82